**Europäisches Patentamt**

**European Patent Office**

**Office européen des brevets**

(19)

(11) Numéro de publication : **0 118 342**
**B1**

(12) **FASCICULE DE BREVET EUROPÉEN**

(45) Date de publication du fascicule du brevet :
**09.11.88**

(51) Int. Cl.⁴ : **G 01 S 13/34**, G 01 S 7/02

(21) Numéro de dépôt : **84400248.5**

(22) Date de dépôt : **06.02.84**

(54) **Radar à onde continue modulée en fréquence et son application à une sonde altimétrique.**

(30) Priorité : **18.02.83 FR 8302721**

(43) Date de publication de la demande :
**12.09.84 Bulletin 84/37**

(45) Mention de la délivrance du brevet :
**09.11.88 Bulletin 88/45**

(84) Etats contractants désignés :
**DE FR GB IT NL**

(56) Documents cités :
**EP-A- 0 049 150**
**US-A- 2 453 169**
**PATENTS ABSTRACTS OF JAPAN, vol. 1, no. 153, 8 décembre 1977, page 8203 E 77 & JP - A - 52 95 996**
**PATENTS ABSTRACTS OF JAPAN, vol. 1, no. 19, 24 mars 1977, page 625 E 77 & JP - A - 52 7688**
Le dossier contient des informations techniques présentées postérieurement au dépôt de la demande et ne figurant pas dans le présent fascicule.

(73) Titulaire : **THOMSON-CSF**
**173, Boulevard Haussmann**
**F-75379 Paris Cédex 08 (FR)**

(72) Inventeur : **Lazarus, Michel**
**THOMSON-CSF SCPI 173, bld Haussmann**
**F-75379 Paris Cedex 08 (FR)**

(74) Mandataire : **Benoit, Monique et al**
**THOMSON-CSF SCPI 19, avenue de Messine**
**F-75008 Paris (FR)**

## Description

La présente invention se rapporte à la technique des systèmes radars à onde continue modulée en fréquence ; elle concerne plus précisément, un équipement radar permettant de fournir, sur une large plage de distance, une mesure précise de la distance relative d'éloignement d'un objet réfléchissant ; elle concerne également une sonde altimétrique radioélectrique.

La technique des radars à onde continue modulée en fréquence, ou radars FM/CW selon la terminologie anglo-saxonne, est largement connue et exposée dans de nombreux ouvrages spécialisés.

A titre d'exemple on pourra se reporter pour la description d'un radar FM/CW au brevet japonais N° 52-95996 (voir Patents Abstracts of japan, vol. 1, N° 153, 8 décembre 1977, page 8203 E 77). Cette technique est presque universellement mise en œuvre dans les radioaltimètres d'aéronefs et les équipements radars similaires. Les principaux avantages d'un radar FM/CW résident dans leur simplicité relative de construction et dans leur capacité à fournir une mesure précise de la distance relative d'éloignement d'un objet réfléchissant situé à l'intérieur de son domaine de détection. Par contre, ces radars FM/CW de l'état de la technique présentent des contraintes de construction et des limitations techniques qui résultent de la nécessité de disposer de deux antennes séparées : une antenne d'émission et une antenne de réception, généralement de caractéristiques radioélectriques et mécaniques identiques. En effet, pour assurer un facteur de découplage radioélectrique suffisant de ces deux antennes, afin d'éliminer les phénomènes d'interférences entre l'émetteur et le récepteur, les antennes doivent être physiquement distantes l'une de l'autre ; il en résulte certains problèmes radioélectriques et mécaniques, du fait notamment que ces antennes ne peuvent être intégrées à l'équipement, mais doivent être fixées sur la paroi du véhicule porteur et interconnectées avec l'équipement par l'intermédiaire de lignes de transmission dont le délai de transmission doit être calibré ; ces lignes de transmission introduisent des pertes de propagation et des réflexions multiples des signaux transmis. De plus, lorsque, la distance relative d'éloignement de l'objet à détecter est extrêmement réduite, il peut apparaître des phénomènes de trajets multiples entre l'objet et la paroi du véhicule porteur, par exemple, lorsque l'objet à détecter est constitué par le sol ou un obstacle de grande étendue ; ces trajets multiples sont à la source de mesures de distance erronées. On peut également noter que lorsque la distance de séparation des antennes n'est plus négligeable devant l'éloignement de l'objet à détecter, la géométrie du système d'antennes devient imparfaite. D'un autre côté, parmi les problèmes mécaniques soulevés par l'implantation des deux antennes sur la paroi du véhicule porteur, on peut citer, la nécessité de réserver, à l'intérieur du véhicule, des logements pour les antennes, des passages pour les lignes de transmission et des accès aux différents connecteurs destinés aux montages et démontage des diverses liaisons ; enfin, la continuité électrique de la paroi du véhicule porteur doit être préservée, ce qui exige que certaines précautions soient prises lors de la construction de la paroi du véhicule.

Dans un équipement radar FM/CW, si le signal émis et le signal réfléchi par un objet sont duplexés sur une antenne commune, il se produit un signal composite de couplage entre l'émetteur et le récepteur ; ce signal composite de couplage résulte principalement d'une réflexion partielle au niveau de l'antenne qui présente un taux d'onde stationnaire de grandeur finie et non nulle, et d'un signal de fuite introduite par le circuit duplexeur dont le coefficient de directivité est technologiquement limité. Il s'ensuit, que ce signal composite de couplage à radio fréquence après démodulation dans le mélangeur d'entrée du récepteur crée à l'entrée de l'amplificateur à audiofréquence du récepteur des signaux d'interférences qui sont partiellement situées dans la bande passante utile du signal écho ; il en résulte une limitation de la sensibilité de détection d'un objet rapproché.

Le but de la présente invention est de remédier aux limitations précitées des radars FM/CW de l'état de la technique.

La présente invention a pour objet un radar à onde continue modulée en fréquence, et son application à une sonde altimétrique, tels que définis dans les revendications.

D'autres caractéristiques et avantages que procure l'invention apparaîtront dans la description détaillée qui va suivre, faite en regard de dessins annexés ; sur ces dessins :
— la figure 1 représente un équipement radar FM/CW de l'état de la technique.
— la figure 2 représente sous la forme d'un schéma synoptique, la configuration de base d'un équipement radar FW/CW selon l'invention.
— la figure 3 représente la loi de déviation en fréquence du signal radiofréquence émise en fonction du temps.
— la figure 4 représente la forme du signal de modulation en fréquence de l'émetteur.
— la figure 5 représente la caractéristique de transfert normalisée du mélangeur équilibré à radiofréquence.
— la figure 6 représente la forme du signal de couplage émetteur-récepteur après modulation dans le mélangeur équilibré en fonction de sa phase différentielle.
— la figure 7 représente la forme du signal de couplage émetteur-récepteur après démodulation dans le mélangeur équilibré en fonction du temps.
— la figure 8 représente la forme du signal de sortie du modulateur de niveau.
— la figure 9 représente la forme du signal parasite résiduel à la sortie de l'amplificateur à audiofréquence.

— la figure 10 représente sous la forme d'un schéma synoptique le circuit de boucle de commande du modulateur de niveau.

— la figure 11 représente sous la forme d'un schéma synoptique, un premier mode de réalisation du détecteur synchrone, du circuit de boucle.

— la figure 12 représente la forme des signaux d'échantillonnage fournis par le générateur d'impulsions du détecteur synchrone.

— la figure 13 représente, sous la forme d'un schéma synoptique, un second mode de réalisation du détecteur synchrone du circuit de boucle.

— la figure 14 représente la forme du signal fourni par le générateur de signaux du détecteur synchrone.

— la figure 15 représente, sous la forme d'un schéma synoptique une variante de réalisation de l'équipement radar FM/CW de la figure 2.

— la figure 16 représente, un mode de construction d'une sonde altimétrique pour missile.

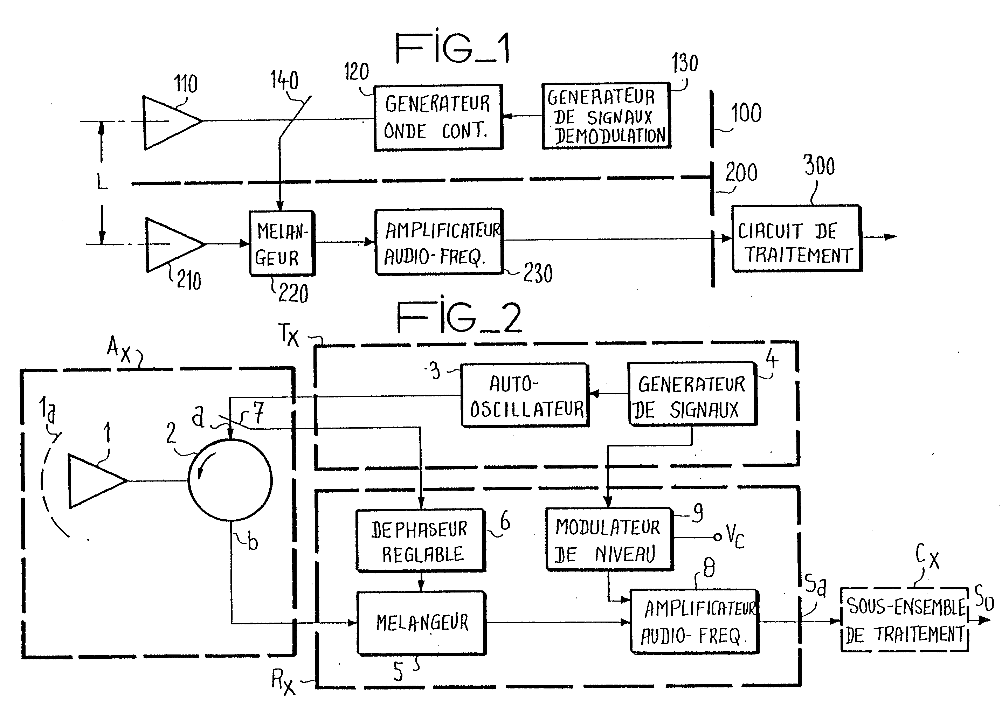

La figure 1 représente la configuration classique d'un équipement radar FM/CW de l'état de la technique. Ce radar comprend les trois sous-ensembles suivants ; un émetteur 100, un récepteur du type homodyne 200 et des circuits 300 de traitement des signaux de sortie du récepteur, pour fournir, au moins, un signal de sortie S, qui porte l'information de la distance relative d'éloignement d'un objet réfléchissant détecté par l'équipement. Le sous-ensemble émetteur inclut, reliés en série, les éléments suivants : une antenne directive 110, un générateur 120 d'onde continue à radiofréquence et un générateur de signaux de modulation 130 ; le sous-ensemble récepteur inclut, reliés en série, les éléments suivants : une antenne 210, un mélangeur équilibré à radiofréquence 220, et un amplificateur à audiofréquence 230 ; la seconde entrée du mélangeur équilibré est reliée à la sortie du générateur 120 d'onde continue par l'intermédiaire d'un coupleur directif 140. La distance de séparation L entre l'antenne d'émission 110 et l'antenne de réception 210 est déterminée afin que le signal de couplage entre l'émetteur et le récepteur soit à un niveau suffisamment faible, déterminée par les performances de détection de l'équipement. Les circuits 300 de traitement du signal de sortie du récepteur exploitent les caractéristiques du signal de battement résultant du mélange dans le mélangeur équilibré des signaux échos captés par l'antenne de réception et du signal de référence disponible à la sortie du coupleur directif 140.

La figure 2, représente, sous la forme d'un schéma synoptique, la configuration de base d'un équipement radar FM/CW, selon l'invention, cet équipement permettant sur une large plage de distance et notamment à très courte distance, de l'ordre du mètre par exemple, de détecter la présence d'un objet réfléchissant et de fournir une mesure de la distance relative d'éloignement de cet objet. Un tel équipement radar FM/CW comprend les principaux sous-ensembles suivants : un sous-ensemble antenne Ax ayant une voie d'entrée a, laquelle voie est connectée à un sous-ensemble émetteur Tx qui fournit une onde continue à radiofréquence modulée en fréquence, et une voie de sortie b, laquelle voie est connectée à un sous-ensemble récepteur Rx qui fournit des signaux de sortie Sa à audiofréquence à un sous-ensemble de traitement Cx qui délivre un signal de mesure So de la distance relative d'éloignement d'un objet détecté.

Le sous-ensemble antenne Ax comprend une antenne directive 1 qui est munie éventuellement d'un radome 1a ; cette antenne présente un taux d'onde stationnaire (T.O.S.) dont la valeur maximale est inférieure à une grandeur déterminée, et un circuit duplexeur 2 dont les voies d'entrée et de sortie sont respectivement connectées aux sous-ensembles émetteur Tx et récepteur Rx ; ce circuit duplexeur peut être constitué par un circulateur classique.

Le sous-ensemble émetteur Tx comprend : un auto-oscillateur 3 qui fournit une onde continue à radiofréquence, de fréquence centrale Fo et de puissance Po, et un générateur de signaux 4 qui délivre un signal périodique de modulation en fréquence de l'auto-oscillateur et qui comporte des moyens de modulation correspondant pour dévier la fréquence centrale Fo entre deux limites extrêmes, Fo-Fm et Fo + Fm, parfaitement définies.

Le sous-ensemble récepteur Rx comprend, connectés en série, les éléments suivants : un mélangeur équilibré 5 à radiofréquence et un amplificateur audiofréquence 8, faible bruit. Le mélangeur équilibré 5 comporte une voie de référence qui est connectée par l'intermédiaire d'un déphaseur réglable 6 à un coupleur directif 7, lequel coupleur directif est inséré entre l'émetteur Tx et le circuit duplexeur 2. L'amplificateur audiofréquence 8 comporte une seconde voie d'entrée qui est connectée par l'intermédiaire d'un modulateur de niveau 9 au générateur 4 du signal de modulation en fréquence de l'auto-oscillateur 3. Ce modulateur de niveau 9 comporte une voie de commande sensible à une source de tension continue Vc réglable. Un tel modulateur de niveau peut être constitué par un modulateur équilibré contrôlable électroniquement par un signal de commande continu.

Par construction, le temps du transit $\tau_1$ du trajet électrique entre le coupleur directif 7 et l'entrée de signal du mélangeur équilibré 5, via l'antenne directive 1 est sensiblement égal au temps de transit $\tau_2$ du trajet électrique entre le coupleur directif 7 et l'entrée de référence du mélangeur équilibré 5. Egalement, par construction la valeur du T.O.S. de l'antenne directive 1 varie peu dans la bande radiofréquence de l'équipement. Ce T.O.S. étant la principale source du signal de couplage de l'émetteur vers le récepteur ; une autre source de couplage est fournie par le circuit duplexeur 2, généralement à un degré moindre.

3

Pour obtenir un fonctionnement optimal de l'équipement, c'est-à-dire pour réduire le niveau des interférences produites par le signal parasite de couplage émetteur/récepteur, la caractéristique de modulation en fréquence de l'émetteur doit être linéaire ; à cet effet, l'autooscillateur à radiofréquence 3 peut inclure un circuit de boucle, comportant un discriminateur linéaire de fréquence, en tant qu'élément de référence, lequel élément peut être également utilisé pour stabiliser la fréquence centrale Fo de l'onde à radiofréquence rayonnée par l'antenne directive 1.

Les circuits de traitement du signal écho à la sortie de l'amplificateur à audiofréquence 8 peuvent être d'un type connu qui exploite les caractéristiques de ce signal écho pour fournir un signal de mesure de la distance de l'objet détecté ; en conséquence ces circuits de traitement ne sont pas décrits ici.

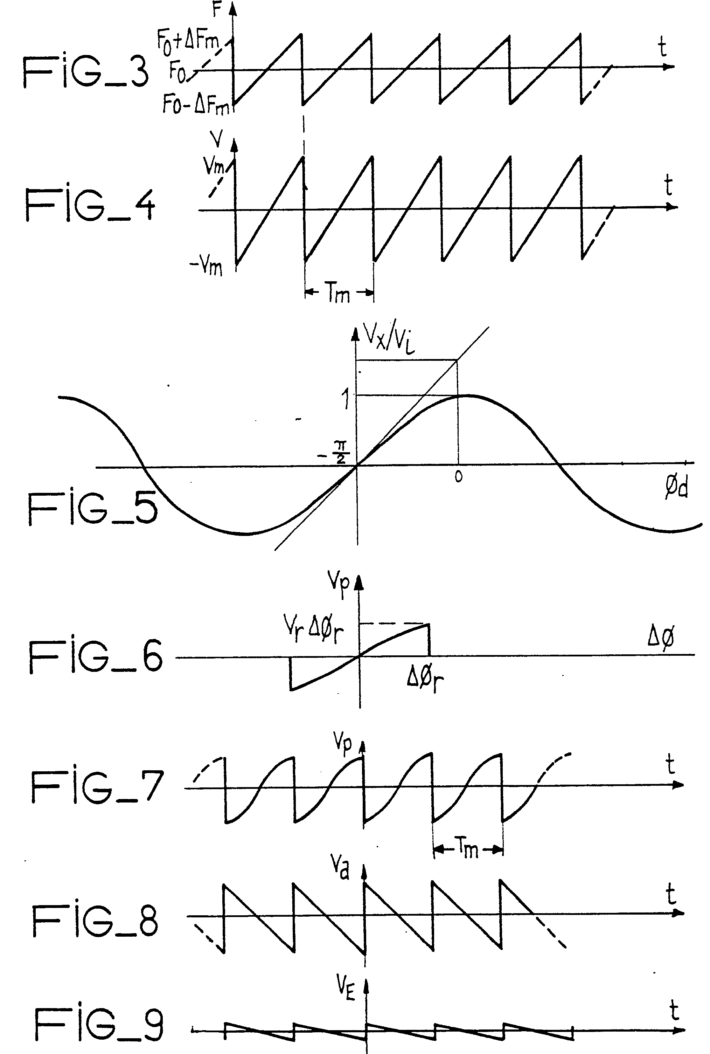

Le fonctionnement de l'équipement radar FM/CW représenté à la figure 2 est décrit ci-après, dans le cas, par exemple, d'une application à la mesure de l'altitude d'un aéronef au-dessus du sol. On considère, à titre illustratif, que le générateur 4 du signal de modulation en fréquence de l'émetteur est un signal en dent de scie linéaire, représenté sur la figure 4 ; ce signal de modulation a une période de récurrence Tm et une amplitude Vm à laquelle correspond la déviation de fréquence $\pm F_m$ de part et d'autre de la fréquence centrale $F_0$ de l'onde continue à radiofréquence rayonnée par l'antenne directive 1 comme représenté à la figure 3.

Le niveau de puissance Pe du signal écho réfléchi par le sol est donné par la formule générale :

$$Pe = \frac{P_o \, G_A \, \lambda_o^2 \, \sigma_o}{(4 \, \pi)^2 \, H^2}$$

dans laquelle :

$P_o$ est le niveau de puissance du signal à radiofréquence rayonnée par l'antenne ;

$G_A$ le gain de l'antenne directive, déterminé par les conditions opérationnelles d'emploi de l'équipement ;

$\lambda_o = C/F_o$ la longueur d'onde de fonctionnement de l'équipement ;

$\sigma_o$ le coefficient de réflectivité du sol, et H, l'altitude de l'aéronef au-dessus du sol.

L'amplitude correspondante Ve du signal écho à l'entrée de signal du mélangeur équilibré 5 est de la forme :

$$Ve = K_o H^{-1}$$

où $K_o$ est un terme constant et ce signal écho est reçu avec un retard de temps $\tau_e = 2H/C$.

Si, on admet que le niveau de puissance du signal de fuite du circuit duplexeur 2 est sensiblement inférieur à celui du signal réfléchi par l'antenne directive 1, la puissance $P_r$ du signal de couplage émetteur-récepteur est donnée par la relation suivante :

$$P_r = P_o \left( \frac{\theta - 1}{\theta + 1} \right)^2$$

dans laquelle le paramètre $\theta$ est la grandeur du T.O.S. présenté par l'antenne. L'amplitude Vr du signal de couplage émetteur-récepteur à l'entrée de signal du mélangeur équilibré est alors de la forme :

$$Vr = K_1 = \text{constante}$$

et ce signal de couplage est affecté d'un retard de temps $\tau_1$ proportionnel à la longueur électrique de la liaison coupleur directif-mélangeur équilibré via l'antenne.

Le niveau de puissance $P_R$ du signal de référence fourni par le coupleur directif 7 est donné par la relation suivante :

$$P_R = \alpha Po$$

dans laquelle le paramètre $\alpha$ est le coefficient de transmission du coupleur directif. L'amplitude correspondante $V_R$ du signal de référence à l'entrée de référence du mélangeur équilibré 5 est de la forme :

$$V_R = K_2 = \text{constante}$$

Par construction, on réalise la condition suivante :

$$K_1 < K_2$$

La figure 5 représente la caractéristique de transfert normalisée Vx/Vi d'un mélangeur équilibré, ou détecteur cohérent, cette caractéristique de transfert normalisée est de la forme :

$$\frac{V_x}{V_i} = \cos\ (\phi_R - \phi_i) = \cos \phi_d$$

où,

$V_x$ est l'amplitude du signal à la sortie du mélangeur,

$V_i$ est l'amplitude du signal d'entrée,

$\emptyset_d$ la phase relative, entre la phase $\emptyset_R$ du signal de référence et la phase $\emptyset_i$ du signal d'entrée.

Le déphaseur réglable 6 introduit dans la voie différence un déphasage $\emptyset_D$ de façon qu'à la fréquence centrale Fo des signaux d'entrée et de référence la relation suivante :

$$2\,\pi\,.\,F_o\,\Delta\tau + \phi_D = (2\,K + 1)\frac{\pi}{2}$$

soit sensiblement satisfaite.

Le déphasage différentiel maximal $\Delta\emptyset_r$ entre le signal de référence $V_R$ et le signal Vr de couplage émetteur-récepteur est donné par la relation suivante :

$$\Delta\phi_r = 2\,\pi\,.\,\Delta Fm\,(\tau_1 - \tau_2)$$

Par construction, la grandeur $\Delta\tau = (\tau_1 - \tau_2)$ est faible de façon que $\Delta\emptyset_r$ soit notablement inférieur à $\pi/2$ ; alors l'amplitude Vp du signal parasite résultant du signal de couplage émetteur-récepteur est donnée par la relation suivante :

$$Vp = Vr\cos\left(\frac{\pi}{2} + \Delta\phi_r\right) \approx Vr\,\Delta\phi_r$$

comme représenté à la figure 6.

Le signal réfléchi par le sol et capté par l'antenne après un délai de propagation $\tau_e$ est également démodulé dans le mélangeur équilibré et le déphasage diférentiel maximal $\Delta\emptyset_e$ entre le signal de référence $V_R$ et ce signal écho Ve est donné par la relation suivante :

$$\phi_e = 2\,\pi\,.\,\Delta Fm\,\tau_e$$

Ainsi, le signal écho à la sortie du mélangeur équilibré est constitué par un train de signaux quasi-sinusoïdal définis par leur « fréquence de battement fb » donnée par la relation suivante :

$$fb = \frac{\Delta Fm}{Tm}\tau_e$$

Cette fréquence de battement fb est indépendante de l'altitude H de l'aéronef si le rapport $\tau e/Tm$ est maintenu constant et, inversement, elle est proportionnelle à l'altitude H si la période Tm du signal de modulation de l'émetteur est maintenue à une valeur fixe.

La figure 7 représente en fonction du temps, la forme du signal $V_P$ de couplage émetteur-récepteur après démodulation dans le mélangeur équilibré 2 et la figure 8 représente le signal à la sortie du modulateur de niveau 9 ; ce signal Va est identique au signal Vm de modulation en fréquence de l'émetteur et son amplitude est proportionnelle au facteur de multiplication $K_3$ introduit par le modulateur de niveau, ce facteur $K_3$ étant proportionnel à la valeur de la tension de commande Vc. Il résulte de la soustraction de ces deux signaux $V_P$ et $V_a$ à l'entrée de l'amplificateur à audiofréquence que le signal résiduel $V_r$, représenté à la figure 9, est réduit à un niveau extrêmement faible. On peut noter, que ce circuit d'annulation, constitué par le modulateur de niveau 9 connecté entre le générateur de signal de modulation en fréquence de l'émetteur et la seconde entrée de l'amplificateur à audiofréquence n'a aucun effet sur un signal écho qui est amplifié normalement par l'amplificateur à audiofréquence.

Le retard de temps relatif $\Delta t = (\tau_1 - \tau_2)$ résultant de la différence de longueur électriques des lignes de transmission entre le coupleur directif 7 et les entrées du mélange équilibré peut être réduit, par une construction appropriée, à une valeur de l'ordre de $10^{-10}$ seconde. La plage de réglage du déphaseur réglable 6 doit être au moins égale à $\pi/2$ radians.

Le fonctionnement des circuits de traitement du signal écho disponible à la sortie de l'amplificateur à audiofréquence étant connu par ailleurs n'est pas décrit ici.

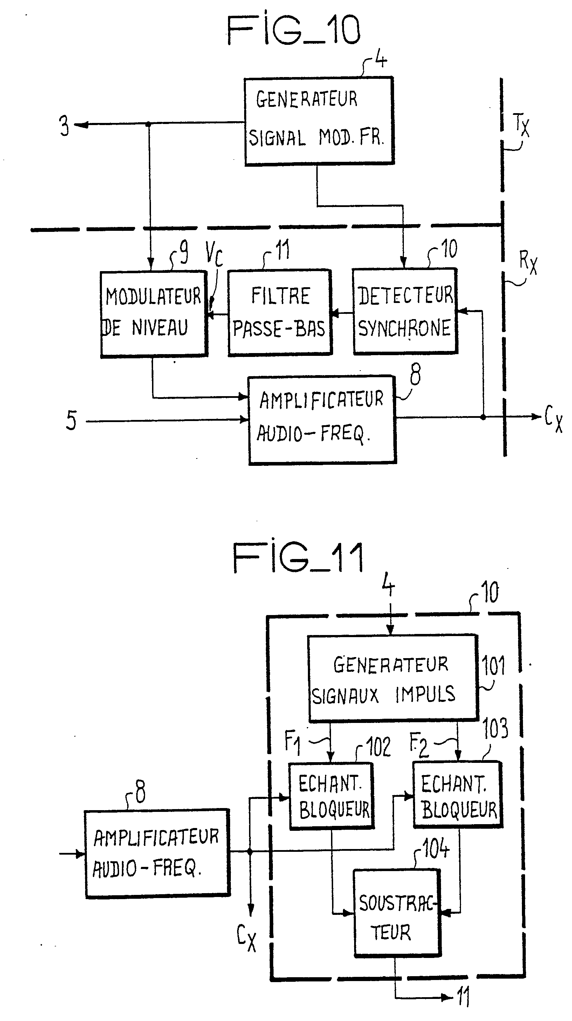

Dans le but de maintenir les performances des circuits d'annulation du signal de couplage émission-réception après démodulation dans le récepteur, il est préférable d'asservir la grandeur du signal de tension continue Vc, appliqué à l'entrée de commande du modulateur de niveau 9, à la valeur du signal résiduel $V_r$ qui apparaît à la sortie de l'amplificateur à audiofréquence 8. A cet effet, le récepteur comporte un circuit de boucle qui est connecté entre la sortie de l'amplificateur à audiofréquence et l'entrée de commande du modulateur de niveau, comme représenté à la figure 10. Ce circuit de boucle comprend essentiellement un détecteur synchrone 10, dont l'entrée signal est connectée à la sortie de l'amplificateur à audiofréquence 8 et l'entrée de référence au générateur 4 du signal de modulation en fréquence de l'émetteur, et un filtre passe-bas 11 qui est connecté à l'entrée de commande du modulateur de niveau 9, ce filtre passe-bas étant, préférentiellement, du type actif et constitué par un intégrateur classique.

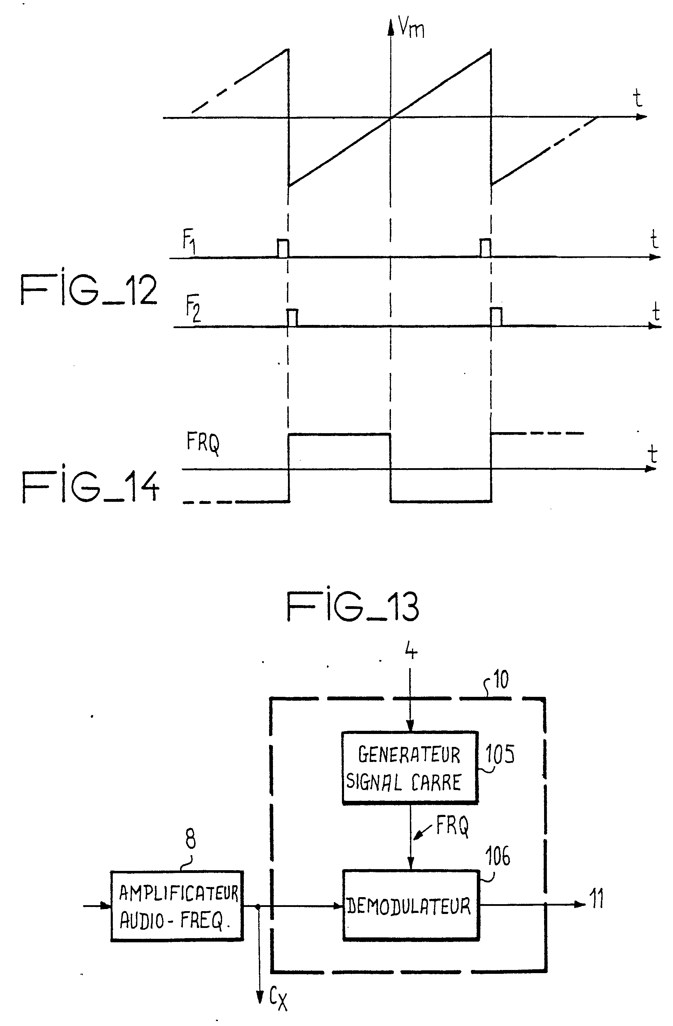

La figure 11 montre, sous la forme d'un schéma synoptique, un premier mode de réalisation du détecteur synchrone 10 représenté à la figure 10, ce détecteur synchrone opérant avec un signal de référence en dent de scie. Selon ce premier mode de réalisation, le détecteur synchrone 10 comprend un générateur 101 qui fournit deux signaux en impulsions $F_1$ et $F_2$ qui sont positionnées dans le temps de part et d'autre du front de retour du signal de modulation en dent de scie comme représenté sur la figure 12, sur laquelle les signaux en impulsions $F_1$ et $F_2$ sont représentés en regard du signal de modulation en dent de scie. Ces signaux en impulsions $F_1$ et $F_2$, ou impulsions d'échantillonnage sont fournis respectivement aux entrées de commande de deux circuits échantillonneurs-bloqueurs 102 et 103, lesquels circuits ayant une entrée commune qui est connectée à la sortie de l'amplificateur à audiofréquence 8. La sortie de ces deux circuits échantillonneurs-bloqueurs est connectée à un circuit soustracteur 104, la sortie duquel est connectée à l'entrée du filtre passe-bas 11.

La figure 13 montre sous la forme d'un schéma synoptique un second mode de réalisation du détecteur synchrone 10, représenté à la figure 11, ce détecteur opérant également avec un signal de référence en dent de scie. Selon ce second mode de réalisation, le détecteur synchrone 10 comprend un générateur 105, qui fournit un signal carré FRQ représenté sur la figure 14 en regard du signal de modulation en dent de scie de la figure 12, et un démodulateur équilibré 106 dont l'entrée de commande est reliée au générateur du signal carré et l'entrée de signal à la sortie de l'amplificateur audiofréquence 8. La sortie du démodulateur équilibré 106 est reliée à l'entrée du filtre passe-bas 11.

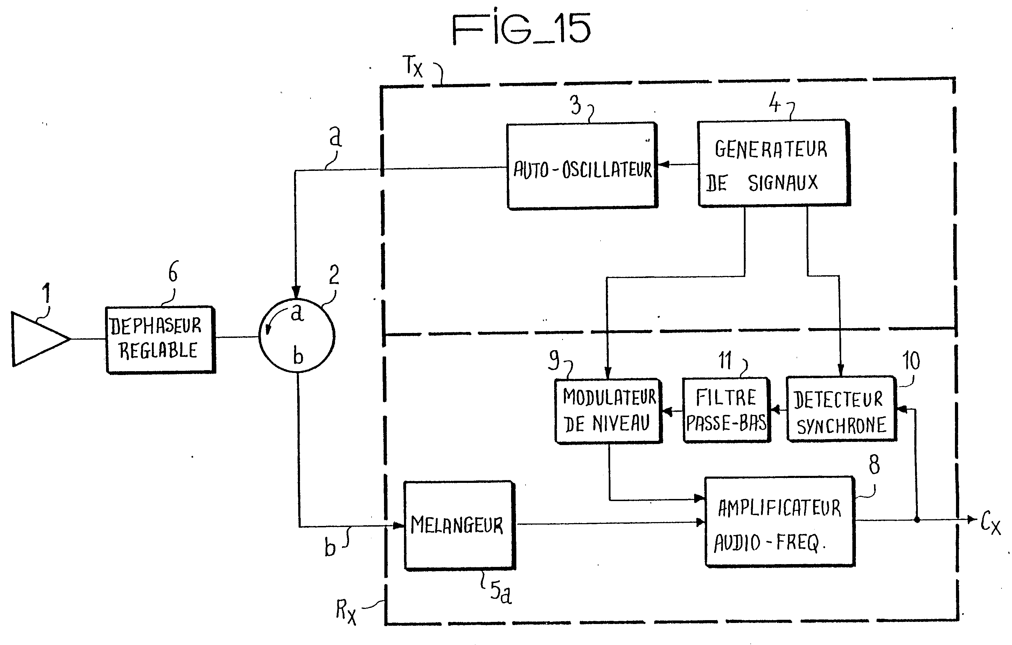

La figure 15 représente, sous la forme d'un schéma synoptique, une variante du mode de réalisation de l'équipement radar FM/CW décrit à la figure 2. Selon cette variante de réalisation, le sous-ensemble récepteur RX comprend un mélangeur d'entrée 5a du type non équilibré dans lequel les voies d'entrée sont partiellement communes ; en conséquence le déphaseur réglable 6, permettant d'ajuster la phase relative des signaux de référence et de couplage émission-réception, est inséré entre l'antenne directive 1 et le circuit duplexeur 2. Dans le but de minimiser le temps de retard différentiel entre le signal de couplage émission-réception, la longueur de la liaison antenne-duplexeur doit être réduite à une valeur minimale. Dans un premier mode de construction, le coefficient de directivité du circuit duplexeur 2 est déterminé afin d'obtenir dans la voie de sortie b un niveau de signal sensiblement supérieur à celui du signal réfléchi par l'antenne directive. Selon un mode de construction légèrement différent, la valeur du coefficient de directivité du circuit duplexeur est rendue maximale et la valeur du T.O.S. de l'antenne directive est ajustée pour obtenir un niveau du signal réfléchi qui soit sensiblement supérieur à celui du signal de fuite du circuit duplexeur. Il faut toutefois remarquer que la sensibilité de détection d'un récepteur comprenant un mélangeur d'entrée non équilibré est sensiblement inférieure à celle fournie par un récepteur comprenant un mélange d'entrée équilibré puisque les modulations parasites et les bruits d'amplitude du signal de référence ne sont pas éliminées.

Dans ce qui suit, on décrit une application particulière de l'invention à une sonde altimétrique radioélectrique destinée à un missile susceptible de se déplacer rapidement au voisinage du sol. A titre illustratif, un tel missile doit voler à une altitude de quelques mètres au-dessus d'un plan d'eau et la limite inférieure de mesure de distance se situe aux environs d'un mètre, tandis que la limite supérieure de mesure de distance peut atteindre 100 m. Généralement, un missile est constitué par l'association de sections spécialisées, toutes identiques en diamètre. Les caractéristiques électriques d'une sonde altimétrique telle que considérée ici peuvent être les suivantes : la fréquence centrale de fonctionnement peut être située dans la bande des fréquences micro-ondes comprises entre 5 et 15 GHz pour lesquelles la propagation dans la basse atmosphère sur des distances réduites n'est pratiquement pas perturbée. Le niveau de puissance du signal micro-onde rayonné par l'antenne 1 est de l'ordre de quelques dizaines de mW pour un gain d'antenne d'environ 13 dB ; la déviation de fréquence de la fréquence porteuse peut être de l'ordre de 250 MHz crête à crête.

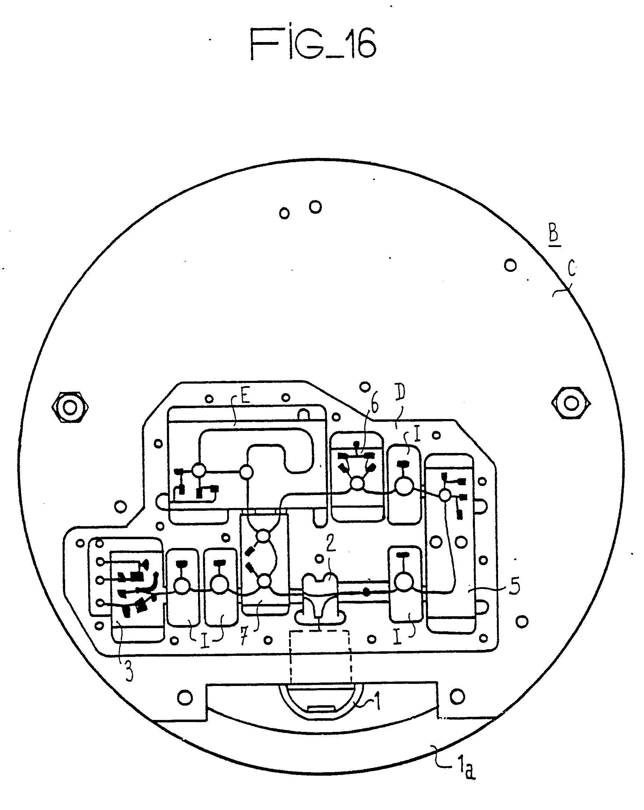

La figure 16 représente un mode de construction d'une sonde altimétrique destinée à un missile. Cette sonde comprend un boîtier B rigide de forme cylindrique qui constitue l'une des sections spécialisées du corps du missile. Ce boîtier comporte à sa périphérie un logement dans lequel est fixée rigidement une antenne directive 1 protégée par un radome 1a. Ce boîtier comprend également une cloison C, incluant une cavité D sur le fond de laquelle est monté un circuit hybride qui rassemble les divers composants micro-ondes des sous-ensembles émetteur et récepteur : le circuit duplexeur 2, le mélangeur équilibré 5, le déphaseur réglable 6, le coupleur directif 7, l'oscillateur micro-onde 3, et des éléments annexes tels que des isolateurs 1, et des circuits micro-ondes E des moyens de linéarisation de la caractéristique de modulation en fréquence de l'oscillateur micro-onde 3. Ce circuit hybride reçoit un couvercle, non représenté sur la figure. Enfin, des cartes à circuits imprimés sont montées à l'intérieur du boîtier ; sur ces cartes à circuits imprimés sont assemblés les circuits électroniques tels que le générateur du signal de modulation en fréquence de l'émetteur, l'amplificateur à audiofréquence, les circuits d'annulation du signal de couplage émetteur-récepteur et les circuits de traitement du signal de sortie du récepteur.

L'invention n'est pas limitée dans ses caractéristiques et ses applications au mode de réalisation

décrit en détail précédemment. En effet, la forme du signal de modulation en fréquence de l'onde émise peut être différente, par exemple triangulaire ou sinusoïdale, mais aussi d'autres formes de signal, du fait des caractéristiques linéaires des circuits d'annulation du signal de couplage émetteur-récepteur. Le sous-ensemble émetteur peut être réalisé d'une manière différente, selon le type des composants utilisés : diode GUNN ou IMPATT ou encore des transistors FET microonde.

L'invention trouve également son application dans les radio-altimètres pour aéronefs, les détecteurs d'obstacles, les fusées de proximité pour missiles, les senseurs d'abordage des navires, les senseurs d'accouplement des satellites, et d'une façon générale dans les équipements destinés à la mesure radioélectrique précise d'une distance.

**Revendications**

1. Radar à onde continue modulée en fréquence comprenant un émetteur (Tx) et récepteur homodyne (Rx) qui sont duplexés sur une antenne commune (1), l'émetteur (Tx) comprenant à son tour un générateur (4) de signaux de modulation, et le récepteur homodyne comprenant à son tour un mélangeur à radiofréquence (5), caractérisé en ce qu'il comprend un déphaseur à radiofréquence (6) qui est inséré dans l'une des voies d'entrée du mélangeur à radiofréquence (5) du récepteur, et une voie de signal permettant d'injecter à l'entrée de l'amplificateur à audiofréquence (8) du récepteur, une fraction déterminée du signal du générateur (4) de signaux de modulation de l'émetteur, afin de réduire la composante démodulée (Vp) du signal de couplage émetteur-récepteur (Vr) introduit par l'antenne (1) et le duplexeur (2).

2. Radar selon la revendication 1, caractérisé en ce que la voie de signal entre le générateur de signaux (4) de modulation de l'émetteur et l'entrée de l'amplificateur à audiofréquence (8) du récepteur comprend un modulateur de niveau (9) ayant une entrée de commande sensible à une source de signal continue (Vc) réglable.

3. Radar selon la revendication 2, caractérisé en ce que la source de signal continue réglable de commande du modulateur (9) est fournie par un circuit de boucle (10, 11) qui est connecté entre la sortie de l'amplificateur à audiofréquence (8) et l'entrée de commande du modulateur de niveau (9).

4. Radar selon la revendication 3, caractérisé en ce que le circuit de boucle qui fournit le signal de commande du modulateur de niveau 9 comprend, connectés en série : un détecteur synchrone (10) dont l'entrée de référence est connectée au générateur de signaux (4) de modulation de l'émetteur et un filtre passe-bas (11) connecté à l'entrée de commande du modulateur de niveau.

5. Radar selon la revendication 1, caractérisé en ce que les longueurs électriques des voies d'entrée du mélangeur à radio-fréquence (5) du récepteur sont sensiblement égales.

6. Sonde altimétrique, caractérisée par un radar selon l'une des revendications 1 à 5.

**Claims**

1. An FM continuous wave radar installation comprising a transmitter (Tx) and a homodyne receiver (Rx) which are duplexed to a common antenna (1), the transmitter (Tx) comprising for its part a generator (4) of modulation signals, and the homodyne receiver for its part comprising a radio frequency mixer (5), characterized in that it comprises a radio frequency phase converter (6) which is placed on one of the input paths of the radio frequency mixer (5) of the receiver, and one signal path making it possible to inject, at the input of the audio frequency amplifier (8) of the receiver, a given fraction of the modulation signal of the transmitter in order to reduce the demodulated component (Vp) of the transmitter-receiver coupling signal (Vr) introduced by the antenna (1) and the duplexer (2).

2. The radar installation as claimed in claim 1, characterized in that the signal path between the modulation signal generator (4) of the transmitter and the input of the audio frequency amplifier (8) of the receiver comprises a level modulator (9) having a control input responding to an adjustable source of continuous signal (Vc).

3. The radar installation as claimed in claim 2, characterized in that the adjustable continuous signal source for control of the modulator (9) is furnished by a loop circuit (10 and 11) which is connected between the output of the audio frequency amplifier (8) and the control input of the level modulator (9).

4. The radar installation as claimed in claim 3, characterized in that the loop circuit which supplies the control signal of the level modulator 9 comprises, connected in series : a synchronous detector (10) whose reference input is connected with the modulation signal generator (4) for the transmitter and a low pass filter (11) connected to the control input of the level modulator.

5. The radar installation as claimed in claim 1, characterized in that the electrical lengths of the input paths of the radio frequency mixer (5) of the receiver are substantially equal.

6. An altimetric device characterized by a radar installation as claimed in any one of the claims 1 through 5.

**0 118 342**

**Patentansprüche**

1. Frequenzmodulations-Dauerstrich-Radar, mit einem Sender (Tx) und einem Homodyneempfänger (Rx), die auf eine gemeinsame Antenne (1) duplexiert werden, wobei der Sender (Tx) seinerseits einen Modulationssignalgenerator (4) umfaßt und der Homodyneempfänger (Rx) seinerseits einen HF-Mischer (5) umfaßt, dadurch gekennzeichnet, daß es einen HF-Phasenschieber (6) umfaßt, der in einen der Eingangswege des HF-Mischers (5) des Empfängers eingefügt ist, sowie einen Signalweg umfaßt, der es ermöglicht, am Eingang des Tonfrequenzverstärkers (8) des Empfängers einen bestimmten Bruchteil des Signals des Modulationssignalgenerators (4) des Senders einzugeben, um die demodulierte Komponente (Vp) des Sender-/Empfänger-Kopplungssignals (Vr) zu verringern, das über die Antenne (1) und den Duplexer (2) eingegeben worden ist.

2. Radar nach Anspruch 1, dadurch gekennzeichnet, daß der Signalweg zwischen dem Modulationssignalgenerator (4) des Senders und dem Eingang des Tonfrequenzverstärkers (8) des Empfängers einen Pegelmodulator (9) mit einem Steuereingang aufweist, der auf eine einstellbare kontinuierliche Signalquelle (Vc) anspricht.

3. Radar nach Anspruch 2, dadurch gekennzeichnet, daß die einstellbare kontinuierliche Signalquelle zur Steuerung des Modulators (9) über eine Schleifenschaltung (10, 11) geliefert wird, die zwischen dem Ausgang des Tonfrequenzverstärkers (8) und dem Eingang zur Steuerung des Pegelmodulators (9) angeschlossen ist.

4. Radar nach Anspruch 3, dadurch gekennzeichnet, daß die das Steuersignal des Pegelmodulators 9 liefernde Schleifenschaltung in Reihe geschaltet umfaßt: einen Synchrondetektor (10), dessen Referenzeingang mit dem Modulationssignalgenerator (4) des Senders verbunden ist, sowie ein Tiefpaßfilter (11), das mit dem Steuereingang des Pegelmodulators verbunden ist.

5. Radar nach Anspruch 1, dadurch gekennzeichnet, daß die elektrischen Längen der Eingangswege des HF-Mischers (5) des Empfängers im wesentlichen gleich sind.

6. Höhenmeßsonde, durch ein Radar nach einem der Ansprüche 1 bis 5 gekennzeichnet.

8

# FIG_1

110  140  120 GENERATEUR ONDE CONT.  130 GENERATEUR DE SIGNAUX DEMODULATION  100

210  MELAN-GEUR 220  AMPLIFICATEUR AUDIO-FREQ. 230  200  300 CIRCUIT DE TRAITEMENT

L

# FIG_2

Ax  Tx

1a  1  2  d  7

3 AUTO-OSCILLATEUR  4 GENERATEUR DE SIGNAUX

b

6 DEPHASEUR REGLABLE  9 MODULATEUR DE NIVEAU  Vc

5 MELANGEUR  8 AMPLIFICATEUR AUDIO-FREQ.  Sa  Cx SOUS-ENSEMBLE DE TRAITEMENT  So

Rx

0 118 342

0 118 342

FIG_3

FIG_4

FIG_5

FIG_6

FIG_7

FIG_8

FIG_9

0 118 342

FIG_10

FIG_11

FIG_12

FIG_14

FIG_13

FIG_15

# FIG_16